# EUROPÄISCHE PATENTANMELDUNG

(11) **EP 0 825 522 A2**
(43) Veröffentlichungstag der Anmeldung: **25.02.1998**
(21) Anmeldenummer: 97110439.3
(22) Anmeldetag: 26.06.1997
(51) Int. Cl.: G06F 3/06, G11B 27/10

(54) **Datenrecorder und Verfahren zum Lesen/Schreiben des Recorders**

(30) Priorität: 23.08.1996 DE 19634063
(71) Anmelder: ROBERT BOSCH GMBH, 70442 Stuttgart (DE)
(72) Erfinder: Behrens, Andreas, 31177 Harsum (DE); Dierkes, Volkmar, 31180 Giesen (DE)

(57) **Zusammenfassung**

Es wird ein Datenrecorder für das digitale Lesen/Speichern eines Datenflusses mit hoher Datengeschwindigkeit vorgeschlagen, sowie ein Verfahren zur Speicherung der Daten, die dazu dienen, bei einer Echtzeitaufzeichnung auf groß dimensionierte Zwischenspeicher zu verzichten und ein transportables Gerät mit hohen Aufzeichnungsgeschwindigkelten darzustellen.

## Beschreibung

### Stand der Technik

Die Erfindung geht aus von einem Datenrecorder für das digitale Lesen/Speichern eines Datenflusses mit hoher Datengeschwindigkeit sowie einem Verfahren zum Lesen/Schreiben von Daten nach der Gattung des unabhängigen Patentanspruchs.
Es sind für den Zweck der Speicherung von digitalen Daten mit sehr hohen Datenraten, im allgemeinen Bilddaten, bereits Datenrecorder bekannt, die als Massenspeicher Magnetbänder einsetzen (Datenblatt BTS, DCR100, Digitales MAZ-System).
Diese Recorder sind in der Lage, Datenmenge in digitaler Form von mehreren Megabyte bis zu einigen Gigabyte zu speichern. Nachteilig ist die Baugröße des Geräts, so daß ein Transport nicht einfach ermöglich ist.
Für den Zweck einer Zwischenspeicherung von Daten, in der Zeit, in der der Massenspeicher nicht zur Verfügung steht, sind Smart Cards bekannt, die zur Zwischenspeicherung von Daten im RAM im PC dienen. Die Daten im RAM werden anschließend auf eine Festplatte geschrieben. Nachteilig ist hier, daß bei großen Datenraten sehr große Zwischenspeicher notwendig werden.

### Vorteile der Erfindung

Der erfindungsgemäße Datenrecorder mit den kennzeichnenden Merkmalen des unabhängigen Patentanspruchs hat dem gegenüber den Vorteil, daß auch bei hohen Datenraten eine einfache Speicherung möglich wird, indem mindestens zwei Hochleistungsfestplatten als Massenspeicher eingesetzt werden. Dabei ist es von Vorteil, daß der notwendige Zwischenspeicher, der die Umschaltzeiten zwischen den Platten überbrückt, wesentlich kleiner dimensioniert werden kann, als bei Verwendung nur einer Festplatte. Das Ansprechen der verschiedenen Speichereinheiten wird von einer Steuerung überwacht. Damit wird ein transportabler Datenrecorder geschaffen, der sehr hohe Speicherkapazitäten für Echtzeit-Aufzeichnungen bietet. Gegenüber einer Lösung mit einem großdimensionierten Zwischenspeicher hat der erfindungsgemäße Datenrecorder Kostenvorteile.

Durch die in den Unteransprüchen aufgeführten Maßnahmen sind vorteilhafte Weiterbildungen und Verbesserungen des im unabhängigen Anspruch angegebenen Datenrecorders möglich. Besonders vorteilhaft ist es, daß z. B. die Umschaltung zwischen die Festplatten über einen schnellen Schalter erfolgt, während dessen die Daten im Zwischenspeicher gespeichert werden.

Das Verfahren zum Beschreiben des Datenrecorder nach den kennzeichenden Merkmalen des unabhängigen Anspruchs hat weiterhin den Vorteil, daß in der Zeit, während der eine Festplatte mit Daten beschreiben wird, eine weitere Festplatte ihren Lese/Schreibkopf neu kalibriert und wieder positioniert.

Ein weiterer Vorteil ist es, daß alle Daten, die während einer Umschaltung von einer Platte auf die andere übertragen werden, zunächst im Zwischenspeicher gespeichert werden, und anschließend auf die Festplatte geschrieben werden, die gerade keine Neukalibrierung durchführt. Weiterhin ist es von Vorteil, daß die Neukalibrierung der Schreib/Leseköpfe der Festplatten durch einen Systembefehl ausgelöst wird und nicht einem automatischen Takt unterliegt.

### Zeichnungen

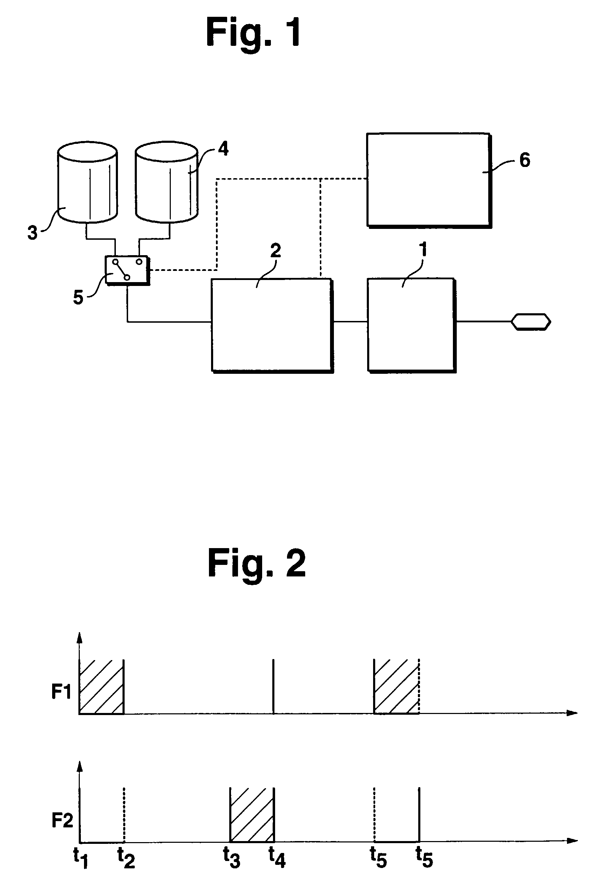

Ein Ausführungsbeispiel der Erfindung wird in der Zeichnung dargestellt und in der nachfolgenden Beschreibng näher erläutert. Es zeigt Figur 1 eine schematische Darstellung des Datenrecorders, Figur 2 den zeitlichen Verlauf einer Echtzeitaufzeichnung mit zwei Festplatten.

### Beschreibung des Ausführungsbeispiels

Für den erfindungsgemäßen Datenrecorder werden beispielsweise zwei moderne Hochleistungsfestplatten eingesetzt. Hochleistungsfestplatten müssen ihre Schreib/Leseköpfe in regelmäßigen Abständen, z. B. alle 10 Minuten, neu kalibrieren, um ihre hohe Geschwindigkeit und Kapazität zu erhalten. Dieser Vorgang des Neukalibrierens dauert z.B. 200 bis 300 ms. Während dieser Zeit fällt die Festplatte als Massenspeicher für den Datenrecorder aus. Figur 1 zeigt den Aufbau des erfindungsgemäßen Datenrecorders. Für die Aufzeichnung von Daten wird der Recorder über die Univeralsschnittstelle 1 angeschlossen. Über diese synchrone Schnittstelle wird mit jedem Datentakt ein weiteres Datenwort aufgenommen, das im Zwischenspeicher 2 eingestellt und vorgehalten wird. Sind genügend Datenworte gesammelt worden, werden sie auf die Festplatte 3 geschrieben. Fällt die Festplatte 3 durch die Neukonfigurierung des Schreib/Lesekopfes gerade aus, müßten die Daten im Zwischenspeicher gespeichert werden. Bei hohen Datenraten, z. B. 50 MB/s würde ein großer Zwischenspeicher von mindestens 2 MB benötigt. Daher wird eine zweite Festplatte 4 in das System eingebaut. Die Systemsteuerung übernimmt die Steuerung des Schalters 5, so daß im Fall einer Neukonfigurierung der Festplatte 3 die Daten auf die nächste Festplatte, z.B. 4, weitergeleitet werden. Werden genügend schnelle Schalter 5 verwendet, ist für die Überbrückung der Schaltzeit nur noch ein kleiner Zwischenspeicher mit beispielsweise ca. 128 kByte nötig. Figur 2 zeigt den zeitlichen Ablauf eines Echtzeitspeichervorgangs. Die Festplatte F1 und F2 stehen für die Speicherung im Recorder zur Verfügung. Zum Zeitpunkt t₁ beginnt die Festplatte F1 mit einer Initialisierung sowie einer Kalibrierung und Neupositionierung des Schreib/Lesekopfes. Die Festplatte F1 ist zum Zeitpunkt t₂ mit der Kalibrierung fertig, meldet sich an der Steuerung zurück. Damit beginnt zum Zeitpunkt t₂ das Aufzeichnen der Daten. Während der Übertagungszeit von t₂ bis t₄ wird die Festplatte 2 neu kalibriert. Dies geschieht im Zeitraum t₃ bis t₄. Ab dem Zeitpunkt t₄ steht die Festplatte F2 als Schreib/Lesemedium zur Verfügung und die Festplatte 1 kann ihren Schreib/Lesekopf wieder neu kalibrieren. Die Kalibrierung erfolgt im Zeitraum t₄ bis t₅.

Das erfindungsgemäße Verfahren kann auch entsprechend für mehr als zwei Festplatten angewendet werden.

Voraussetzung für eine kontinuierlichen Betrieb der Echtzeitaufzeichnung ist, daß die einzelnen Datenbereiche die auf die Festplatten geschrieben werden sollen, groß genug sind, um die Kalibrierungszeit der anderen Festplatte zu überbrücken. Ist eine Neukalibrierung der Festplatten im Zehnminutenraster vorgesehen, müssen die Datenblöcke, die z.B. länger als 10 Minuten dauern, unterteilt werden. Dabei kann die Unterteilung der Abspieldauer z. B. von 20 Minuten auf 2 Platten mit einer Kapazität von jeweils 10 Minuten so erfolgen, daß zuerst die erste Platte bis zum Ende beschrieben wird, dann die zweite Platte, während die erste Platte kalibriert wird. Der Abstand der Kalibrierung der einzelnen Platten kann auch vom Steuerungssystem des Datenrecorders ausgelöst werden, so daß das Zehnminutenraster angepaßt, d. h. verkleinert werden kann. Damit sind z. B. Kalibrierungsabstände von 5 Minuten einstellbar.

## Patentansprüche

1. Datenrecorder für das digitale Lesen/Speichern eines Datenflusses mit hoher Datengeschwindigkeit mit einem Zwischenspeicher für Daten (2) und einem Massenspeicher, sowie einer Steuerung (6) zur Lenkung des Datenflusses, dadurch gekennzeichnet, daß der Massenspeicher aus mindestens zwei Festplatten (3,4) besteht, auf die die Daten alternierend geschrieben bzw. von denen die Daten alternierend gelesen werden.

2. Datenrecorder nach Anspruch 1, dadurch gekennzeichnet, daß der Datenfluß über einen von der Steuerung (6)überwachten Schalter (5) auf die Festplatte gelenkt wird, die gerade beschrieben/gelesen werden kann.

3. Verfahren zum Beschreiben eines Datenrecorders mit einem Zwischenspeicher für Daten (2) und einem Massenspeicher, sowie einer Steuerung (6) zur Lenkung des Datenflusses, dadurch gekennzeichnet, daß die Daten auf eine Festplatte (3) geschrieben oder von ihr gelesen werden, während weitere Festplatten (4) eine Neukalibrierung des Lese/Schreibkopfes durchführen können.

4. Verfahren zum Beschreiben eines Datenrecorders nach Anspruch 3, dadurch gekennzeichnet, daß die Daten während des Umschaltvorgangs von einer Festplatte zur anderen in einem Zwischenspeicher (2) abgelegt werden.

5. Verfahren nach Anspruch 3 oder 4, dadurch gekennzeichnet, daß mindestens zwei Platten (3,4) im Endlosbetrieb alternierend gelesen/beschrieben werden können.

6. Verfahren nach Anspruch 3 bis 5, dadurch gekennzeichnet, daß der Zeitpunkt zur Kalibrierung der Schreib/Lesekköpfe von der Steuerung (6) des Datenrecorders vorgegeben wird.
